# EUROPÄISCHE PATENTSCHRIFT

(11) **EP 3 407 238 B1**
(45) Veröffentlichungstag und Bekanntmachung des Hinweises auf die Patenterteilung: **28.04.2021**
(21) Anmeldenummer: 18172057.4
(22) Anmeldetag: 14.05.2018
(51) Int. Cl.: G06F 21/62, G06F 16/31

(54) **KOMMUNIKATIONSVORRICHTUNG ZUM INDEXIEREN EINER VERSCHLÜSSELTEN KOMMUNIKATIONSNACHRICHT**
COMMUNICATION DEVICE FOR INDEXING AN ENCRYPTED COMMUNICATION MESSAGE
DISPOSITIF DE COMMUNICATION DESTINÉ À INDEXER UN MESSAGE DE COMMUNICATION CHIFFRÉ

(30) Priorität: 24.05.2017 DE 102017111480
(43) Veröffentlichungstag der Anmeldung: 28.11.2018
(73) Patentinhaber: Bundesdruckerei GmbH, 10969 Berlin (DE)
(72) Erfinder: MÖLLER, Stefan, 44789 Bochum (DE)
(74) Vertreter: Patentship Patentanwaltsgesellschaft mbH

(56) Entgegenhaltungen:
- WO-A1-2008/041810
- DE-U1-202015 104 128
- US-A1- 2009 214 044
- US-A1- 2016 246 828

## Beschreibung

Die vorliegende Erfindung betrifft das technische Gebiet der Indexierung von Kommunikationsnachrichten, insbesondere E-Mails.

Die Gebrauchsmusterschrift DE 20 2015 104128 U1 offenbart ein Datenzugriffssystem.

Die Offenlegungsschrift US 2016/246828 A1 offenbart ein Verfahren und eine Vorrichtung zum Erzeugen eines Index für verschlüsselte Daten.

Die Offenlegungsschrift WO 2008/041810 A1 offenbart ein Verfahren zum Indexieren von verschlüsselten Daten.

Die Offenlegungsschrift US 2009/214044 A1 offenbart, dass verschlüsselte Daten entschlüsselt und dann indexiert werden, wobei die entschlüsselten Daten wieder verschlüsselt in einem Archiv abgespeichert werden.

Zur Vereinfachung einer Suche in einer Vielzahl von Kommunikationsnachrichten kann eine Indexierung der Kommunikationsnachrichten durchgeführt werden. Gegenwärtig wird eine derartige Indexierung typischerweise jedoch ausschließlich für unverschlüsselte Kommunikationsnachrichten im Klartext vorgenommen.

Durch die zunehmende Verbreitung verschlüsselter Kommunikation sowohl im privaten Bereich als auch im geschäftlichen Bereich besteht jedoch ein Bedarf, auch verschlüsselte Kommunikationsnachrichten einfach zu indexieren und somit durchsuchbar zu machen.

Es ist daher eine Aufgabe der vorliegenden Erfindung, ein effizientes Konzept zum Indexieren einer verschlüsselten Kommunikationsnachricht zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe durch den Aufbau eines Indexierungsdatensatzes für verschlüsselte Kommunikationsnachrichten gelöst werden kann, welcher seinerseits verschlüsselt abgelegt werden kann. Dadurch wird erreicht, dass verschlüsselte Kommunikationsnachrichten unter Verwendung des Indexierungsdatensatzes durchsuchbar sind, wobei die verschlüsselten Kommunikationsnachrichten weiterhin in verschlüsselter Form gespeichert werden können.

Gemäß einem ersten Aspekt betrifft die Erfindung eine Kommunikationsvorrichtung zum Indexieren einer verschlüsselten Kommunikationsnachricht, wobei die verschlüsselte Kommunikationsnachricht unter Verwendung eines kryptographischen Verschlüsselungsschlüssels verschlüsselt ist. Die Kommunikationsvorrichtung umfasst eine Kommunikationsschnittstelle, welche ausgebildet ist, die verschlüsselte Kommunikationsnachricht über ein Kommunikationsnetzwerk zu empfangen. Die Kommunikationsvorrichtung umfasst ferner eine Datenbank, in welcher ein Indexierungsdatensatz gespeichert ist, wobei der Indexierungsdatensatz eine Mehrzahl von Indexierungsbegriffen umfasst. Die Kommunikationsvorrichtung umfasst zudem einen Prozessor, welcher ausgebildet ist, die verschlüsselte Kommunikationsnachricht unter Verwendung eines kryptographischen Entschlüsselungsschlüssels zu entschlüsseln, um eine entschlüsselte Kommunikationsnachricht zu erhalten, einen Begriff aus der entschlüsselten Kommunikationsnachricht zu extrahieren, einen Indexierungsbegriff aus der Mehrzahl von Indexierungsbegriffen auszuwählen, welcher dem extrahierten Begriff entspricht, und die verschlüsselte Kommunikationsnachricht dem ausgewählten Indexierungsbegriff zuzuordnen, um die verschlüsselte Kommunikationsnachricht zu indexieren.

Das Extrahieren des Begriffs aus der entschlüsselten Kommunikationsnachricht kann beispielsweise dadurch erfolgen, dass zunächst eine Mehrzahl von Begriffen innerhalb der entschlüsselten Kommunikationsnachricht, welche beispielsweise durch Leerzeichen oder andere vorbestimmte Steuerzeichen voneinander getrennt sind, bestimmt werden, und der Begriff anschließend aus der Mehrzahl von Begriffen durch den Prozessor ausgewählt wird. Die Auswahl des Begriffes aus der Mehrzahl von Begriffen kann beispielsweise gemäß einem vorbestimmten Auswahlschema oder zufällig erfolgen.

Der ausgewählte Indexierungsbegriff kann dem extrahierten Begriff beispielsweise dann entsprechen, wenn der ausgewählte Indexierungsbegriff und der extrahierte Begriff identisch sind. Ferner kann zuvor eine Vereinheitlichung der Begriffe dahingehend erfolgen, dass die Groß- bzw. Kleinschreibung der Begriffe vereinheitlicht wird, dass Eszett (ß) in Doppel-S (ss) aufgelöst wird, und/oder dass Umlaute (ä/ae, ö/oe, ü/ue) entsprechend aufgelöst werden.

Gemäß einer Ausführungsform ist der Prozessor ausgebildet, den extrahierten Begriff als Indexierungsbegriff zu dem Indexierungsdatensatz hinzuzufügen, falls kein Indexierungsbegriff der Mehrzahl von Indexierungsbegriffen dem extrahierten Begriff entspricht, und die verschlüsselte Kommunikationsnachricht dem hinzugefügten Indexierungsbegriff zuzuordnen. Dadurch wird der Vorteil erreicht, dass der Indexierungsdatensatz effizient mit neuen Indexierungsbegriffen erweitert werden kann.

Gemäß einer Ausführungsform ist der Prozessor ausgebildet, den Begriff aus der entschlüsselten Kommunikationsnachricht unter Verwendung eines lexikalischen Scanners zu extrahieren. Dadurch wird der Vorteil erreicht, dass der Begriff aus der entschlüsselten Kommunikationsnachricht effizient extrahiert werden kann.

Gemäß einer Ausführungsform umfasst die Datenbank ferner einen Sperrdatensatz, wobei der Sperrdatensatz eine Mehrzahl von Sperrbegriffen umfasst, und wobei der Prozessor ausgebildet ist, den extrahierten Begriff zu verwerfen, falls der extrahierte Begriff einem Sperrbegriff der Mehrzahl von Sperrbegriffen entspricht. Dadurch wird der Vorteil erreicht, dass die Sperrbegriffe, beispielsweise sicherheitsrelevante Begriffe, nicht als Indexierungsbegriffe dem Indexierungsdatensatz hinzugefügt werden können. Folglich kann eine schwarze Liste (engl. blacklist) mit Sperrbegriffen verwendet werden.

Gemäß einer Ausführungsform ist der verschlüsselten Kommunikationsnachricht eine Identifikationskennung zugeordnet, wobei der Prozessor ausgebildet ist, die verschlüsselte Kommunikationsnachricht dem ausgewählten Indexierungsbegriff unter Verwendung der Identifikationskennung zuzuordnen. Dadurch wird der Vorteil erreicht, dass die Zuordnung effizient realisiert werden kann.

Gemäß einer Ausführungsform ist der Prozessor ausgebildet, die verschlüsselte Kommunikationsnachricht in der Datenbank abzulegen. Dadurch wird der Vorteil erreicht, dass die Kommunikationsnachricht in verschlüsselter Form gespeichert werden kann.

Gemäß einer Ausführungsform ist der Prozessor ausgebildet, den Indexierungsdatensatz unter Verwendung des kryptographischen Verschlüsselungsschlüssels zu verschlüsseln, um einen verschlüsselten Indexierungsdatensatz zu erhalten, und den verschlüsselten Indexierungsdatensatz in der Datenbank abzulegen. Dadurch wird der Vorteil erreicht, dass die Mehrzahl von Indexierungsbegriffen vor unbefugtem Zugriff geschützt werden kann.

Gemäß einer Ausführungsform ist der Prozessor ausgebildet, den Indexierungsdatensatz zu löschen oder den Indexierungsdatensatz mit dem verschlüsselten Indexierungsdatensatz zu überschreiben. Dadurch wird der Vorteil erreicht, dass ein Zugriff auf den Indexierungsdatensatz in unverschlüsselter Form verhindert werden kann.

Gemäß einer Ausführungsform ist der Prozessor ausgebildet, den verschlüsselten Indexierungsdatensatz unter Verwendung des kryptographischen Entschlüsselungsschlüssels zu entschlüsseln. Dadurch wird der Vorteil erreicht, dass der Indexierungsdatensatz in unverschlüsselter Form effizient bereitgestellt werden kann.

Gemäß einer Ausführungsform bilden der kryptographische Verschlüsselungsschlüssel und der kryptographische Entschlüsselungsschlüssel ein kryptographisches Schlüsselpaar, oder sind der kryptographische Verschlüsselungsschlüssel und der kryptographische Entschlüsselungsschlüssel identisch. Dadurch wird der Vorteil erreicht, dass ein asymmetrischer Verschlüsselungsansatz oder ein symmetrischer Verschlüsselungsansatz verwendet werden können.

Gemäß einer Ausführungsform ist der Prozessor ausgebildet, einen Suchbegriff mit der Mehrzahl von Indexierungsbegriffen des Indexierungsdatensatzes zu vergleichen, einen Indexierungsbegriff aus der Mehrzahl von Indexierungsbegriffen auszuwählen, welcher dem Suchbegriff entspricht, und zumindest eine indexierte verschlüsselte Kommunikationsnachricht zu bestimmen, welche dem ausgewählten Indexierungsbegriff zugeordnet ist. Dadurch wird der Vorteil erreicht, dass der Indexierungsdatensatz effizient durchsucht werden kann. Die zumindest eine indexierte verschlüsselte Kommunikationsnachricht kann beispielsweise zuvor durch den Prozessor der Kommunikationsvorrichtung indexiert worden sein und mittels des Indexierungsdatensatzes auffindbar sein.

Der ausgewählte Indexierungsbegriff kann dem Suchbegriff beispielsweise dann entsprechen, wenn der ausgewählte Indexierungsbegriff und der Suchbegriff identisch sind. Ferner kann zuvor eine Vereinheitlichung der Begriffe dahingehend erfolgen, dass die Groß- bzw. Kleinschreibung der Begriffe vereinheitlicht wird, dass Eszett (ß) in Doppel-S (ss) aufgelöst wird, und/oder dass Umlaute (ä/ae, ö/oe, ü/ue) entsprechend aufgelöst werden. Zudem können Wildcards ("*", "?", "#") in dem Suchbegriff verwendet und entsprechend berücksichtigt werden. Insbesondere kann hierdurch eine unscharfe Suche realisiert werden.

Gemäß einer Ausführungsform ist jeder Indexierungsbegriff der Mehrzahl von Indexierungsbegriffen jeweils durch eine Zeichenkette gebildet. Dadurch wird der Vorteil erreicht, dass die Indexierungsbegriffe effizient repräsentiert werden können. Entsprechend können auch der extrahierte Begriff, jeder Sperrbegriff und/oder der Suchbegriff jeweils durch eine Zeichenkette gebildet sein. Eine jeweilige Zeichenkette kann eine Mehrzahl alphanumerischer Zeichen gemäß einer vorbestimmten Zeichenkodierung umfassen.

Gemäß einer Ausführungsform ist die Kommunikationsnachricht eine E-Mail. Dadurch wird der Vorteil erreicht, dass eine Indexierung standardisierter Kommunikationsnachrichten durchgeführt werden kann. Das Kommunikationsnetzwerk kann das Internet umfassen.

Gemäß einem zweiten Aspekt betrifft die Erfindung ein Verfahren zum Indexieren einer verschlüsselten Kommunikationsnachricht unter Verwendung einer Kommunikationsvorrichtung, wobei die verschlüsselte Kommunikationsnachricht unter Verwendung eines kryptographischen Verschlüsselungsschlüssels verschlüsselt ist. Die Kommunikationsvorrichtung umfasst eine Kommunikationsschnittstelle, eine Datenbank und einen Prozessor, wobei in der Datenbank ein Indexierungsdatensatz gespeichert ist, und wobei der Indexierungsdatensatz eine Mehrzahl von Indexierungsbegriffen umfasst. Das Verfahren umfasst ein Empfangen der verschlüsselten Kommunikationsnachricht über ein Kommunikationsnetzwerk durch die Kommunikationsschnittstelle, ein Entschlüsseln der verschlüsselten Kommunikationsnachricht unter Verwendung eines kryptographischen Entschlüsselungsschlüssels durch den Prozessor, um eine entschlüsselte Kommunikationsnachricht zu erhalten, ein Extrahieren eines Begriffs aus der entschlüsselten Kommunikationsnachricht durch den Prozessor, ein Auswählen eines Indexierungsbegriffs aus der Mehrzahl von Indexierungsbegriffen, welcher dem extrahierten Begriff entspricht, durch den Prozessor, und ein Zuordnen der verschlüsselten Kommunikationsnachricht zu dem ausgewählten Indexierungsbegriff durch den Prozessor, um die verschlüsselte Kommunikationsnachricht zu indexieren.

Das Verfahren kann durch die Kommunikationsvorrichtung durchgeführt werden. Weitere Merkmale des Verfahrens resultieren unmittelbar aus den Merkmalen oder der Funktionalität der Kommunikationsvorrichtung.

Gemäß einem dritten Aspekt betrifft die Erfindung ein Computerprogramm mit einem Programmcode zum Ausführen des Verfahrens gemäß dem zweiten Aspekt der Erfindung.

Die Kommunikationsvorrichtung kann programmtechnisch eingerichtet sein, um den Programmcode auszuführen. Das Computerprogramm kann beispielsweise in Form eines Plug-ins für einen E-Mail-Client realisiert werden. Das Plug-in kann insbesondere zum Indexieren der verschlüsselten Kommunikationsnachricht eingesetzt werden.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein schematisches Diagramm einer Kommunikationsvorrichtung zum Indexieren einer verschlüsselten Kommunikationsnachricht; und
- Fig. 2: ein schematisches Diagramm eines Verfahrens zum Indexieren einer verschlüsselten Kommunikationsnachricht unter Verwendung einer Kommunikationsvorrichtung.

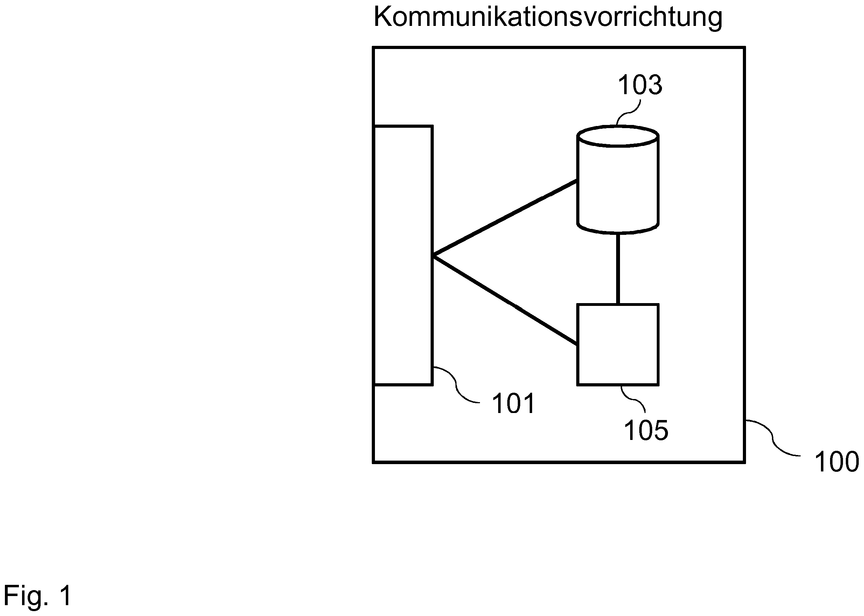

Fig. 1 zeigt ein schematisches Diagramm einer Kommunikationsvorrichtung 100 zum Indexieren einer verschlüsselten Kommunikationsnachricht, wobei die verschlüsselte Kommunikationsnachricht unter Verwendung eines kryptographischen Verschlüsselungsschlüssels verschlüsselt ist.

Die Kommunikationsvorrichtung 100 umfasst eine Kommunikationsschnittstelle 101, welche ausgebildet ist, die verschlüsselte Kommunikationsnachricht über ein Kommunikationsnetzwerk zu empfangen. Die Kommunikationsvorrichtung 100 umfasst ferner eine Datenbank 103, in welcher ein Indexierungsdatensatz gespeichert ist, wobei der Indexierungsdatensatz eine Mehrzahl von Indexierungsbegriffen umfasst. Die Kommunikationsvorrichtung 100 umfasst zudem einen Prozessor 105, welcher ausgebildet ist, die verschlüsselte Kommunikationsnachricht unter Verwendung eines kryptographischen Entschlüsselungsschlüssels zu entschlüsseln, um eine entschlüsselte Kommunikationsnachricht zu erhalten, einen Begriff aus der entschlüsselten Kommunikationsnachricht zu extrahieren, einen Indexierungsbegriff aus der Mehrzahl von Indexierungsbegriffen auszuwählen, welcher dem extrahierten Begriff entspricht, und die verschlüsselte Kommunikationsnachricht dem ausgewählten Indexierungsbegriff zuzuordnen, um die verschlüsselte Kommunikationsnachricht zu indexieren.

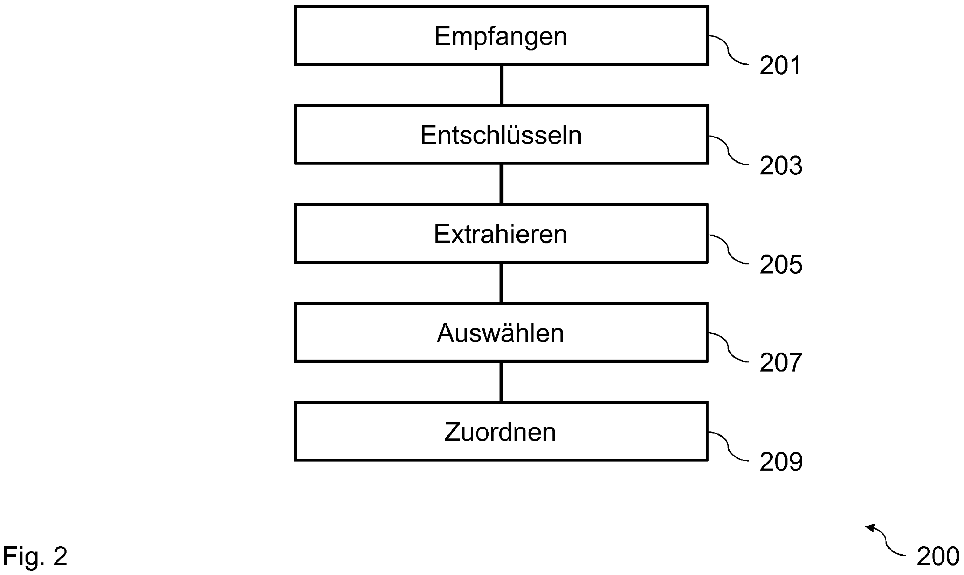

Fig. 2 zeigt ein schematisches Diagramm eines Verfahrens 200 zum Indexieren einer verschlüsselten Kommunikationsnachricht unter Verwendung einer Kommunikationsvorrichtung, wobei die verschlüsselte Kommunikationsnachricht unter Verwendung eines kryptographischen Verschlüsselungsschlüssels verschlüsselt ist. Die Kommunikationsvorrichtung umfasst eine Kommunikationsschnittstelle, eine Datenbank und einen Prozessor, wobei in der Datenbank ein Indexierungsdatensatz gespeichert ist, und wobei der Indexierungsdatensatz eine Mehrzahl von Indexierungsbegriffen umfasst.

Das Verfahren 200 umfasst ein Empfangen 201 der verschlüsselten Kommunikationsnachricht über ein Kommunikationsnetzwerk durch die Kommunikationsschnittstelle, ein Entschlüsseln 203 der verschlüsselten Kommunikationsnachricht unter Verwendung eines kryptographischen Entschlüsselungsschlüssels durch den Prozessor, um eine entschlüsselte Kommunikationsnachricht zu erhalten, ein Extrahieren 205 eines Begriffs aus der entschlüsselten Kommunikationsnachricht durch den Prozessor, ein Auswählen 207 eines Indexierungsbegriffs aus der Mehrzahl von Indexierungsbegriffen, welcher dem extrahierten Begriff entspricht, durch den Prozessor, und ein Zuordnen 209 der verschlüsselten Kommunikationsnachricht zu dem ausgewählten Indexierungsbegriff durch den Prozessor, um die verschlüsselte Kommunikationsnachricht zu indexieren.

Weitere Ausführungsformen der Kommunikationsvorrichtung 100 sowie des Verfahrens 200 werden im Folgenden näher beschrieben, wobei beispielhaft verschlüsselte E-Mails als verschlüsselte Kommunikationsnachrichten verwendet werden. Die vorgestellten Ansätze sind gleichermaßen auch für andere Arten von verschlüsselten Kommunikationsnachrichten einsetzbar, beispielsweise für verschlüsselte Kommunikationsnachrichten in Kurznachrichtendiensten oder Instant-Messaging-Diensten.

Ausführungsformen der Erfindung ermöglichen insbesondere einen effizienten Aufbau eines Indexierungsdatensatzes sowie eine effiziente Suche in verschlüsselten E-Mails. In verschlüsselten E-Mails kann üblicherweise ausschließlich nach dem Betreff, dem Absender, dem Empfänger oder dem Datum gesucht werden; nicht jedoch nach Begriffen im Inhalt der verschlüsselten E-Mails. Zum Durchsuchen eines Inhalts einer verschlüsselten E-Mail wird üblicherweise jede einzelne verschlüsselte Email manuell geöffnet, gegebenenfalls ein Passwort oder eine PIN eingegeben, der Inhalt manuell durchsucht und bei einem Nicht-Auffinden des Suchbegriffs manuell zur nächsten verschlüsselten E-Mail übergegangen.

Mit der zunehmenden Verbreitung von verschlüsselten E-Mails ist es für deren Akzeptanz jedoch von besonderer Bedeutung, eine effiziente Suche durchführen zu können. Eine Herausforderung besteht nun beispielsweise darin, weiterhin ein Suchen nach dem Inhalt von E-Mails zu ermöglichen, auch wenn diese nur verschlüsselt vorliegen. Darüber hinaus können der Komfort und die Geschwindigkeit der Suche nach verschlüsselten E-Mails gesteigert werden.

Der vorgestellte Ansatz kann beispielsweise in Form eines Plug-ins für einen E-Mail-Client realisiert werden, welcher einen lokal verschlüsselten Indexierungsdatensatz über verschlüsselte E-Mails bildet, um weiterhin die Möglichkeit zu haben, den Inhalt von verschlüsselten E-Mails zu durchsuchen. Dieser Indexierungsdatensatz kann beispielsweise mit derselben Technologie bzw. demselben Sicherheitsniveau verschlüsselt werden, der auch für die Verschlüsselung der E-Mails zum Einsatz kommt. Bei mittels SmartCard verschlüsselten E-Mails kann der Indexierungsdatensatz gegebenenfalls auch nur mittels SmartCard zugänglich sein. Bei mittels PGP (Pretty Good Privacy) verschlüsselten E-Mails mit einem Soft-Key kann auch ein ausreichend langes Passwort für den Zugriff auf einen Software-Schlüssel ausreichen. Auf diese Art und Weise wird das Sicherheitsniveau der E-Mails aufrechterhalten.

Parallel dazu kann ein weiterer Indexierungsdatensatz in unverschlüsselter Form für unverschlüsselte E-Mails verwendet werden, damit beispielsweise erweiterte Suchmöglichkeiten auf alle E-Mails, d.h. verschlüsselte E-Mails und unverschlüsselte E-Mails, angewendet werden können.

Mittels einer Konfiguration, beispielsweise firmenweit mittels einer Richtlinie (engl. policy), können E-Mails mit bestimmten Begriffen im Betreff von der Suche explizit ausgeschlossen werden, falls hierzu Bedarf besteht. Dies kann beispielsweise durchgeführt werden, um sicherheitskritische E-Mails nicht durchsuchbar zu machen oder um unerwünschte E-Mails in Form von Spam nicht im Indexierungsdatensatz auftauchen zu lassen. Hierfür kann eine Mehrzahl von Sperrbegriffen definiert werden.

Zudem besteht die Möglichkeit, scharf oder unscharf zu suchen, um beispielsweise die Groß- bzw. Kleinschreibung zu berücksichtigen oder Eszett (ß) in Doppel-s (ss) aufzulösen. Bei der Suche nach dem Begriff "größe" kann somit auch der Begriff "Grösse" indexiert oder aufgefunden werden. Ferner kann beispielsweise der Begriff "foto" in "photo" aufgelöst werden. Folglich kann nach einem bestimmten Suchbegriff gesucht werden und eine verschlüsselte E-Mail mit dem Suchbegriff im Inhalt aufgefunden werden.

Dadurch kann die Integrität verschlüsselter E-Mails sowie die Produktivität im privaten und geschäftlichen Bereiche aufrechterhalten werden. Ferner kann die Akzeptanz verschlüsselter E-Mails gesteigert werden.

Das beschriebene Konzept kann zudem eine effiziente Suche nach einem Suchbegriff innerhalb des Indexierungsdatensatzes ermöglichen. Die Suche kann in unverschlüsselten E-Mails, signierte E-Mails, verschlüsselten E-Mails, sowie in signierten und verschlüsselten E-Mails durchgeführt werden. Der kryptographische Verschlüsselungsschlüssel sowie der kryptographische Entschlüsselungsschlüssel können dabei unter Verwendung von Standard-S/MIME, Hochsicherheits-E-Mails oder PGP bereitgestellt werden.

Die Suche in dem Indexierungsdatensatz kann unter Verwendung der lokalen Datenbank erfolgen. Dabei können beispielsweise zwei getrennten Indexierungsdatensätze aufgebaut werden: ein Indexierungsdatensatz für verschlüsselte E-Mails und ein weiterer Indexierungsdatensatz für unverschlüsselte E-Mails. Der Indexierungsdatensatz für verschlüsselte E-Mails kann beispielsweise über PKCS#11 und/oder SmartCard gesichert sein, d.h. beispielsweise unter Verwendung einer GolD-Karte und eines Fingerabdrucks, welche einen Zugriff auf diesen Indexierungsdatensatz erlauben. Ferner kann eine Sicherung via Passwort erfolgen sofern verschlüsselte Mails nicht via Hardware Token (SmartCard und/oder PKCS#11) gesichert sind um das Sicherheitsniveau des Verschlüsselungsverfahrens nicht herabzusetzen.

Zur Suche kann ferner ein Erfassen von Metadaten einer verschlüsselten E-Mail, beispielsweise Absender, Empfänger, CCs, Betreff, Größe, Datum, Signatur, Verschlüsselung, erfolgen. Zudem kann ein Erfassen von Datei-Anhängen der verschlüsselten E-Mail, beispielsweise PDF, TXT mit XML, Java, Log, und Properties durchgeführt werden. Ferner können ausschließlich Begriffe mit einer Mindestanzahl von Zeichen in den Indexierungsdatensatz aufgenommen werden, damit der Indexierungsdatensatz klein und performant bleibt.

Zudem kann ein Blacklisting von Begriffen mittels eines Sperrdatensatzes erfolgen, welcher Sperrbegriffe enthält, die nicht gefunden werden oder nicht in den Indexierungsdatensatz aufgenommen werden, da diese beispielsweise sehr allgemein sind. Beispielsweise kann der Begriff "Herr" zur Performancesteigerung ignoriert werden, wodurch der Indexierungsdatensatz klein bleibt und schnell durchsuchbar ist. Der Aufbau des Indexierungsdatensatzes kann ferner auf einzelne Ordner innerhalb eines E-Mail-Clients mittels Konfiguration beschränkt werden.

Einzelne E-Mails können ferner aus dem Indexierungsdatensatz ausgeschlossen werden, wobei ein Nutzer informiert werden kann, falls die verschlüsselte E-Mail nicht indexiert wird. Möglich Kriterien hierfür können beispielsweise der Absender, ein Begriff im Betreff oder der gesamte Betreff, oder die Größe sein. Ferner kann ein manueller Ausschluss aus dem Indexierungsdatensatz mittels eines Kontext-Menüs erfolgen. In dem E-Mail-Client kann zudem eine neue Spalte in einer Listenansicht von E-Mails bereitgestellt werden, welche angibt, ob die jeweilige E-Mail indexiert wurde.

Eine Konfiguration der Parameter kann sowohl lokal durch den Nutzer als auch mittels einer Richtlinie für eine Domänengruppe durch Administratoren realisiert werden.

Falls eine neue, unverschlüsselte E-Mail empfangen wird, kann diese unmittelbar in den weiteren Indexierungsdatensatz aufgenommen werden, außer es wird ein Ausschluss-Kriterium gefunden. Falls eine neue, verschlüsselte E-Mail empfangen wird, können die Metadaten unmittelbar in den Indexierungsdatensatz aufgenommen werden; der Inhalt kann nach der Entschlüsselung der verschlüsselten E-Mail in den Indexierungsdatensatz aufgenommen werden.

Eine Suche kann beispielsweise folgendermaßen realisiert werden: Bei einer Suche in verschlüsselten E-Mails erfolgt zunächst eine Passwort-Abfrage oder PIN Abfrage für den Zugriff auf eine SmartCard und/oder ein PKCS#11 Gerät, falls derart konfiguriert. Es kann eine einfache "UND" Suche durchgeführt werden, wobei beispielsweise zwei Wörter mit Leertaste getrennt eingegeben und E-Mails gefunden werden, in denen beide Wörter vorhanden sind. Ferner können Wildcards erlaubt sein, d.h. der Suchbegriff "Projekt*" findet beispielsweise "Projektbericht" aber nicht "Folgeprojekt", der Suchbegriff "*projekt*" findet ebenfalls "Folgeprojekt", und der Suchbegriff "Proje?t" findet "Projekt" und "Project". Ferner kann ein "ODER" Operator erlaubt sein, d.h. der Suchbegriff "Grün | blau" findet sowohl E-Mails mit dem Begriff "Grün" als auch mit dem Begriff "blau".

Zudem kann bei der Suche eine Einschränkung auf Metadaten erfolgen. Der Suchbegriff "an:*name*" findet beispielsweise alle E-Mails, die an jemanden gegangen sind, mit "name" im Absender. Für den Suchbegriff "von:*name*" oder den Suchbegriff "cc:*name*" gilt Entsprechendes. Der Suchbegriff "Anhang:ja" findet beispielsweise E-Mails mit bzw. ohne Anhang, der Suchbegriff "Alter:10d" oder "Alter:4w" findet E-Mails, die maximal 10 Tage oder 4 Wochen alt sind, der Suchbegriff "ab:20kb" findet E-Mails bis 20kb Größe, der Suchbegriff "bis:1 mb" findet E-Mails bis 1 MB Größe, der Suchbegriff "betreff:*wichtig*" findet E-Mails, in denen der Begriff "wichtig" im Betreff steht, der Suchbegriff "gelesen:ja" findet nur E-Mails, die schon gelesen wurden, der Suchbegriff "Priorität:hoch" findet nur E-Mails, deren Priorität auf "hoch" steht, der Suchbegriff "Verschlüsselt:ja" findet nur verschlüsselte E-Mails, und der Suchbegriff "Signiert:ja" findet nur signierte E-Mails.

Ferner kann eine unscharfe Suche realisiert werden, welche mittels einer Konfiguration erlaubt oder verboten werden kann. Zudem kann eine Auflösung von Begriffen mit generalisierten, d.h. normalisierten, Begriffen erfolgen: aus "ß" kann beispielsweise "ss" werden, aus Doppelbuchstaben können beispielsweise einfache Buchstaben werden, aus dem Umlaut "ä" kann beispielsweise "ae" werden, die Groß- bzw. Kleinschreibung kann beispielsweise berücksichtigt werden, aus "ck" kann beispielsweise "k" werden, und aus "ph" kann beispielsweise "f" werden. Folglich wird bei der Suche nach "grose" auch "große" gefunden, und bei der Suche nach "foto" wird auch "photo" gefunden. Dadurch kann der Indexierungsdatensatz kleiner werden, da viele unterschiedliche Begriffe bzw. gebräuchliche abweichende Schreibweisen zu einem generalisierten Begriff zusammengefasst werden.

In den Suchergebnissen kann mittels einer Prozentangabe angezeigt werden, wie genau der Suchbegriff gefunden wurde. So kann beispielsweise das Ergebnis "Photo" bei der Suche nach "Foto" mit "90%" Übereinstimmung angezeigt werden. In einer Liste gefundener E-Mails kann angezeigt werden, wo der Suchbegriff gefunden wurde, beispielsweise im Absender-Feld, im Empfänger-Feld, im Betreff, im Inhalt, oder im Anhang und mit wieviel Prozent Übereinstimmung im Falle einer unscharfen Suche. Zudem kann eine Hervorhebung der gefundenen Suchbegriffe erfolgen. Dabei können durch einen Doppelklick auf ein Suchergebnis jeweils die gefundenen Begriffe hervorgehoben werden.

Alle in Verbindung mit einzelnen Ausführungsformen gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Kommunikationsvorrichtung
- 101: Kommunikationsschnittstelle
- 103: Datenbank
- 105: Prozessor
- 200: Verfahren zum Indexieren einer verschlüsselten Kommunikationsnachricht
- 201: Empfangen der verschlüsselten Kommunikationsnachricht
- 203: Entschlüsseln der verschlüsselten Kommunikationsnachricht
- 205: Extrahieren eines Begriffs
- 207: Auswählen eines Indexierungsbegriffs
- 209: Zuordnen der verschlüsselten Kommunikationsnachricht

## Patentansprüche

1. Kommunikationsvorrichtung (100) zum Indexieren einer verschlüsselten Kommunikationsnachricht, wobei die verschlüsselte Kommunikationsnachricht unter Verwendung eines kryptographischen Verschlüsselungsschlüssels verschlüsselt ist, mit:
einer Kommunikationsschnittstelle (101), welche ausgebildet ist, die verschlüsselte Kommunikationsnachricht über ein Kommunikationsnetzwerk zu empfangen;
einer Datenbank (103), in welcher ein Indexierungsdatensatz gespeichert ist, wobei der Indexierungsdatensatz eine Mehrzahl von Indexierungsbegriffen umfasst; und
einem Prozessor (105), welcher ausgebildet ist, die verschlüsselte Kommunikationsnachricht unter Verwendung eines kryptographischen Entschlüsselungsschlüssels zu entschlüsseln, um eine entschlüsselte Kommunikationsnachricht zu erhalten, einen Begriff aus der entschlüsselten Kommunikationsnachricht zu extrahieren, einen Indexierungsbegriff aus der Mehrzahl von Indexierungsbegriffen auszuwählen, welcher dem extrahierten Begriff entspricht, und die verschlüsselte Kommunikationsnachricht dem ausgewählten Indexierungsbegriff zuzuordnen, um die verschlüsselte Kommunikationsnachricht zu indexieren.

2. Kommunikationsvorrichtung (100) nach Anspruch 1, wobei der Prozessor (105) ausgebildet ist, den extrahierten Begriff als Indexierungsbegriff zu dem Indexierungsdatensatz hinzuzufügen, falls kein Indexierungsbegriff der Mehrzahl von Indexierungsbegriffen dem extrahierten Begriff entspricht, und die verschlüsselte Kommunikationsnachricht dem hinzugefügten Indexierungsbegriff zuzuordnen.

3. Kommunikationsvorrichtung (100) nach einem der vorstehenden Ansprüche, wobei der Prozessor (105) ausgebildet ist, den Begriff aus der entschlüsselten Kommunikationsnachricht unter Verwendung eines lexikalischen Scanners zu extrahieren.

4. Kommunikationsvorrichtung (100) nach einem der vorstehenden Ansprüche, wobei die Datenbank (103) ferner einen Sperrdatensatz umfasst, wobei der Sperrdatensatz eine Mehrzahl von Sperrbegriffen umfasst, und wobei der Prozessor (105) ausgebildet ist, den extrahierten Begriff zu verwerfen, falls der extrahierte Begriff einem Sperrbegriff der Mehrzahl von Sperrbegriffen entspricht.

5. Kommunikationsvorrichtung (100) nach einem der vorstehenden Ansprüche, wobei der verschlüsselten Kommunikationsnachricht eine Identifikationskennung zugeordnet ist, und wobei der Prozessor (105) ausgebildet ist, die verschlüsselte Kommunikationsnachricht dem ausgewählten Indexierungsbegriff unter Verwendung der Identifikationskennung zuzuordnen.

6. Kommunikationsvorrichtung (100) nach einem der vorstehenden Ansprüche, wobei der Prozessor (105) ausgebildet ist, die verschlüsselte Kommunikationsnachricht in der Datenbank (103) abzulegen.

7. Kommunikationsvorrichtung (100) nach einem der vorstehenden Ansprüche, wobei der Prozessor (105) ausgebildet ist, den Indexierungsdatensatz unter Verwendung des kryptographischen Verschlüsselungsschlüssels zu verschlüsseln, um einen verschlüsselten Indexierungsdatensatz zu erhalten, und den verschlüsselten Indexierungsdatensatz in der Datenbank (103) abzulegen.

8. Kommunikationsvorrichtung (100) nach Anspruch 7, wobei der Prozessor (105) ausgebildet ist, den Indexierungsdatensatz zu löschen oder den Indexierungsdatensatz mit dem verschlüsselten Indexierungsdatensatz zu überschreiben.

9. Kommunikationsvorrichtung (100) nach einem der Ansprüche 7 oder 8, wobei der Prozessor (105) ausgebildet ist, den verschlüsselten Indexierungsdatensatz unter Verwendung des kryptographischen Entschlüsselungsschlüssels zu entschlüsseln.

10. Kommunikationsvorrichtung (100) nach einem der vorstehenden Ansprüche, wobei der kryptographische Verschlüsselungsschlüssel und der kryptographische Entschlüsselungsschlüssel ein kryptographisches Schlüsselpaar bilden, oder wobei der kryptographische Verschlüsselungsschlüssel und der kryptographische Entschlüsselungsschlüssel identisch sind.

11. Kommunikationsvorrichtung (100) nach einem der vorstehenden Ansprüche, wobei der Prozessor (105) ausgebildet ist, einen Suchbegriff mit der Mehrzahl von Indexierungsbegriffen des Indexierungsdatensatzes zu vergleichen, einen Indexierungsbegriff aus der Mehrzahl von Indexierungsbegriffen auszuwählen, welcher dem Suchbegriff entspricht, und zumindest eine indexierte verschlüsselte Kommunikationsnachricht zu bestimmen, welche dem ausgewählten Indexierungsbegriff zugeordnet ist.

12. Kommunikationsvorrichtung (100) nach einem der vorstehenden Ansprüche, wobei jeder Indexierungsbegriff der Mehrzahl von Indexierungsbegriffen jeweils durch eine Zeichenkette gebildet ist.

13. Kommunikationsvorrichtung (100) nach einem der vorstehenden Ansprüche, wobei die Kommunikationsnachricht eine E-Mail ist.

14. Verfahren (200) zum Indexieren einer verschlüsselten Kommunikationsnachricht unter Verwendung einer Kommunikationsvorrichtung (100), wobei die verschlüsselte Kommunikationsnachricht unter Verwendung eines kryptographischen Verschlüsselungsschlüssels verschlüsselt ist, wobei die Kommunikationsvorrichtung (100) eine Kommunikationsschnittstelle (101), eine Datenbank (103) und einen Prozessor (105) umfasst, wobei in der Datenbank (103) ein Indexierungsdatensatz gespeichert ist, und wobei der Indexierungsdatensatz eine Mehrzahl von Indexierungsbegriffen umfasst, mit:
Empfangen (201) der verschlüsselten Kommunikationsnachricht über ein Kommunikationsnetzwerk durch die Kommunikationsschnittstelle (101);
Entschlüsseln (203) der verschlüsselten Kommunikationsnachricht unter Verwendung eines kryptographischen Entschlüsselungsschlüssels durch den Prozessor (105), um eine entschlüsselte Kommunikationsnachricht zu erhalten;
Extrahieren (205) eines Begriffs aus der entschlüsselten Kommunikationsnachricht durch den Prozessor (105);
Auswählen (207) eines Indexierungsbegriffs aus der Mehrzahl von Indexierungsbegriffen, welcher dem extrahierten Begriff entspricht, durch den Prozessor (105); und
Zuordnen (209) der verschlüsselten Kommunikationsnachricht zu dem ausgewählten Indexierungsbegriff durch den Prozessor (105), um die verschlüsselte Kommunikationsnachricht zu indexieren.

15. Computerprogramm mit einem Programmcode zum Ausführen des Verfahrens (200) nach Anspruch 14.

## Claims

1. A communication device (100) for indexing an encrypted communication message, wherein the encrypted communication message is encrypted using a cryptographic encryption key, the communication device (100) comprising:
a communication interface (101) which is configured to receive the encrypted communication message via a communication network;
a database (103) in which an indexing data set is stored, wherein the indexing data set comprises a plurality of indexing terms; and
a processor (105) which is configured to decrypt the encrypted communication message using a cryptographic decryption key in order to obtain a decrypted communication message, to extract a term from the decrypted communication message, to select an indexing term from the plurality of indexing terms which corresponds to the extracted term, and to assign the encrypted communication message to the selected indexing term in order to index the encrypted communication message.

2. The communication device (100) according to claim 1, wherein the processor (105) is configured to add the extracted term as an indexing term to the indexing data set, if no indexing term of the plurality of indexing terms corresponds to the extracted term, and to assign the encrypted communication message to the added indexing term.

3. The communication device (100) according to one of the preceding claims, wherein the processor (105) is configured to extract the term from the decrypted communication message using a lexical scanner.

4. The communication device (100) according to one of the preceding claims, wherein the database (103) further comprises a lock data set, wherein the lock data set comprises a plurality of lock terms, and wherein the processor (105) is configured to discard the extracted term, if the extracted term corresponds to a lock term of the plurality of lock terms.

5. The communication device (100) according to one of the preceding claims, wherein an identification code is assigned to the encrypted communication message, and wherein the processor (105) is configured to assign the encrypted communication message to the selected indexing term using the identification code.

6. The communication device (100) according to one of the preceding claims, wherein the processor (105) is configured to store the encrypted communication message in the database (103).

7. The communication device (100) according to one of the preceding claims, wherein the processor (105) is configured to encrypt the indexing data set using the cryptographic encryption key in order to obtain an encrypted indexing data set, and to store the encrypted indexing data set in the database (103).

8. The communication device (100) according to claim 7, wherein the processor (105) is configured to delete the indexing data set or to overwrite the indexing data set with the encrypted indexing data set.

9. The communication device (100) according to one of the claims 7 or 8, wherein the processor (105) is configured to decrypt the encrypted indexing data set using the cryptographic decryption key.

10. The communication device (100) according to one of the preceding claims, wherein the cryptographic encryption key and the cryptographic decryption key form a cryptographic key pair, or wherein the cryptographic encryption key and the cryptographic decryption key are identical.

11. The communication device (100) according to one of the preceding claims, wherein the processor (105) is configured to compare a search term with the plurality of indexing terms of the indexing data set, to select an indexing term from the plurality of indexing terms which corresponds to the search term, and to determine at least one indexed encrypted communication message which is assigned with the selected indexing term.

12. The communication device (100) according to one of the preceding claims, wherein each indexing term of the plurality of indexing terms is respectively build by a character string.

13. The communication device (100) according to one of the preceding claims, wherein the communication message is an e-mail.

14. A method (200) for indexing an encrypted communication message using a communication device (100), wherein the encrypted communication message is encrypted using a cryptographic encryption key, wherein the communication device (100) comprises a communication interface (101), a database (103) and a processor (105), wherein an indexing data set is stored in the database (103), and wherein the indexing data set comprises a plurality of indexing terms, the method comprising:
receiving (201) the encrypted communication message via a communication network through the communication interface (101);
decrypting (203) the encrypted communication message by the processor (105) using a cryptographic decryption key to obtain a decrypted communication message;
extracting (205) by the processor (105) a term from the decrypted communication message;
selecting (207) by the processor (105) an indexing term from the plurality of indexing terms which corresponds to the extracted term; and
assigning (209) the encrypted communication message term by the processor (105) to the selected indexing term in order to index the encrypted communication message.

15. A computer program comprising a program code for executing the method (200) according to claim 14.

## Revendications

1. Dispositif de communication (100) destiné à indexer un message de communication crypté, le message de communication crypté étant crypté en utilisant une clé de cryptage cryptographique, comprenant :
une interface de communication (101), laquelle est configurée pour recevoir le message de communication crypté par le biais d'un réseau de communication ;
une base de données (103), dans laquelle est enregistré un jeu de données d'indexation, le jeu de données d'indexation comprenant une pluralité de termes d'indexation ; et
un processeur (105), lequel est configuré pour décrypter le message de communication crypté en utilisant une clé de décryptage cryptographique afin d'obtenir un message de communication décrypté, extraire un terme du message de communication décrypté, sélectionner dans la pluralité de termes d'indexation un terme d'indexation qui correspond au terme extrait et associer le message de communication crypté au terme d'indexation sélectionné afin d'indexer le message de communication crypté.

2. Dispositif de communication (100) selon la revendication 1, le processeur (105) étant configuré pour ajouter le terme extrait en tant que terme d'indexation au jeu de données d'indexation dans le cas où un terme d'indexation de la pluralité de termes d'indexation correspond au terme extrait, et pour associer le message de communication crypté au terme d'indexation ajouté.

3. Dispositif de communication (100) selon l'une des revendications précédentes, le processeur (105) étant configuré pour extraire le terme du message de communication décrypté en utilisant un élément de balayage lexical.

4. Dispositif de communication (100) selon l'une des revendications précédentes, la base de données (103) comprenant en outre un jeu de données de blocage, le jeu de données de blocage comprenant une pluralité de termes de blocage et le processeur (105) étant configuré pour rejeter le terme extrait dans le cas où le terme extrait correspond à un terme de blocage de la pluralité de termes de blocage.

5. Dispositif de communication (100) selon l'une des revendications précédentes, un marqueur d'identification étant associé au message de communication crypté et le processeur (105) étant configuré pour associer le message de communication crypté au terme d'indexation sélectionné en utilisant le marqueur d'identification.

6. Dispositif de communication (100) selon l'une des revendications précédentes, le processeur (105) étant configuré pour déposer le message de communication crypté dans la base de données (103).

7. Dispositif de communication (100) selon l'une des revendications précédentes, le processeur (105) étant configuré pour crypter le jeu de données d'indexation en utilisant la clé de cryptage cryptographique afin d'obtenir un jeu de données d'indexation crypté, et pour déposer le jeu de données d'indexation crypté dans la base de données (103).

8. Dispositif de communication (100) selon la revendication 7, le processeur (105) étant configuré pour effacer le jeu de données d'indexation ou pour remplacer le jeu de données d'indexation par le jeu de données d'indexation crypté.

9. Dispositif de communication (100) selon l'une des revendications 7 et 8, le processeur (105) étant configuré pour décrypter le jeu de données d'indexation crypté en utilisant la clé de décryptage cryptographique.

10. Dispositif de communication (100) selon l'une des revendications précédentes, la clé de cryptage cryptographique et la clé de décryptage cryptographique formant une paire de clés cryptographiques, ou la clé de cryptage cryptographique et la clé de décryptage cryptographique étant identiques.

11. Dispositif de communication (100) selon l'une des revendications précédentes, le processeur (105) étant configuré pour comparer un terme recherché avec la pluralité de termes d'indexation du jeu de données d'indexation, sélectionner parmi la pluralité de termes d'indexation un terme d'indexation qui correspond au terme recherché, et déterminer au moins un message de communication crypté indexé qui est associé au terme d'indexation sélectionné.

12. Dispositif de communication (100) selon l'une des revendications précédentes, chaque terme d'indexation de la pluralité de termes d'indexation étant respectivement formé par une chaîne de caractères.

13. Dispositif de communication (100) selon l'une des revendications précédentes, le message de communication étant un courrier électronique.

14. Procédé (200) d'indexation d'un message de communication crypté en utilisant un dispositif de communication (100), le message de communication crypté étant crypté en utilisant une clé de cryptage cryptographique, le dispositif de communication (100) comprenant une interface de communication (101), une base de données (103) et un processeur (105), un jeu de données d'indexation étant enregistré dans la base de données (103), et le jeu de données d'indexation comprenant une pluralité de termes d'indexation, comprenant :
la réception (201) du message de communication crypté par le biais d'un réseau de communication par l'interface de communication (101) ;
le décryptage (203) du message de communication crypté par le processeur (105) en utilisant une clé de décryptage cryptographique afin d'obtenir un message de communication décrypté ;
l'extraction (205) d'un terme du message de communication décrypté par le processeur (105) ;
la sélection (207) par le processeur (105), dans la pluralité de termes d'indexation, d'un terme d'indexation qui correspond au terme extrait ; et
l'association (209) par le processeur (105) du message de communication crypté au terme d'indexation sélectionné afin d'indexer le message de communication crypté.

15. Programme informatique comprenant un code de programme pour mettre en œuvre le procédé (200) selon la revendication 14.
